# EUROPEAN PATENT SPECIFICATION

(11) **EP 3 988 303 B1**
(45) Date of publication and mention of the grant of the patent: **26.07.2023**
(21) Application number: 21212599.1
(22) Date of filing: 10.11.2017
(51) Int. Cl.: B33Y 10/00, B33Y 30/00, B33Y 50/02, B29C 64/153, B29C 64/259, B29C 64/357, B29C 64/393, B29C 64/307, B29C 64/205, B29C 64/264, B22F 10/30, B22F 12/00, B22F 10/28, B22F 10/34, B22F 10/85, B33Y 40/00

(54) **METHOD FOR OPERATING AT LEAST ONE APPARATUS FOR ADDITIVELY MANUFACTURING OF THREEDIMENSIONAL OBJECTS**
VERFAHREN ZUM BETRIEB VON MINDESTENS EINER VORRICHTUNG ZUR ADDITIVEN HERSTELLUNG VON DREIDIMENSIONALEN OBJEKTEN
PROCÉDÉ DE FONCTIONNEMENT D'AU MOINS UN APPAREIL POUR LA FABRICATION ADDITIVE D'OBJETS TRIDIMENSIONNELS

(43) Date of publication of application: 27.04.2022
(62) Divisional of application: 17201220.5
(73) Proprietor: Concept Laser GmbH, 96215 Lichtenfels (DE)
(72) Inventor: Zeidler, Stephan, 15834 Rangsdorf (DE); Kroher, Tanja, 96479 Weitramsdorf (DE)
(74) Representative: Hafner & Kohl PartmbB

(56) References cited:
- EP-A1- 3 228 441
- DE-U1-202009 000 825

## Description

The invention relates to a method for operating at least one apparatus for additively manufacturing of three-dimensional objects by means of successive layerwise selective irradiation and consolidation of layers of a build material which can be consolidated by means of an energy source, which apparatus comprises at least one build material container adapted to receive build material. Such apparatuses and methods for operating the same are generally known from prior art. DE202009000825U1 discloses a system for the reuse of powder in an apparatus for additively manufacturing of objects. Typically, a powdery build material is used that can be consolidated, for example upon irradiation with a corresponding energy source, e.g. a laser beam or an electron beam. Further, it is known from prior art that different properties of the build material may influence the manufacturing quality or different properties of the object to be manufactured, e.g. mechanical properties.

Additionally, build material that has not been consolidated throughout a manufacturing process can be reused in another manufacturing process, in particular after post-processing the non-consolidated build material. The post-processing is usually performed via a suitable post-processing apparatus, e.g. a sieving unit separating (at least partially) consolidated build material from non-consolidated build material.

It is an object to provide an improved method for operating at least one apparatus for additively manufacturing of three-dimensional objects, in particular wherein the quality of the manufactured object is improved.

The object is inventively achieved by a method according to claim 1. Advantageous embodiments of the invention are subject to the dependent claims. The apparatus the method described herein is performed on, is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that the number of build processes at least one part of the build material received in the at least one build material container has been used in is determined. Thus, the method suggests to determine how often the respective amount or volume of build material that is received in the at least one build material container has already been used in manufacturing processes. In other words, the method allows for a determination of the manufacturing process cycles the build material went through.

Therefore, by way of the invention it is possible to determine whether the build material has already been used in a manufacturing process and in how many manufacturing processes the build material received in the build material container has already been used or whether the build material has not been used in a manufacturing process ("fresh build material").

This allows for the generation of information regarding the quality of the build material, as the number of manufacturing process cycles the build material has been used in may be disadvantageous for the quality of the build material. For example, if the build material received in the build material container has already been used in a manufacturing process, non-consolidated build material may be contained in the volume of build material. Further, the temperature differences that occur during the manufacturing process may also have negative effects on the build material, e.g in the event of using synthetic materials a partial decomposition may occur. Also, a segregation of a defined build material blend, e.g. regarding a particle size distribution, may progress with the number of manufacturing processes.

Additionally, post-processing steps performed on the non-consolidated build material, i.e. the reused build material, may also have negative effects on the build material. For example, the particle size distribution of the build material may be changed during post-processing, as in typical sieving units different mesh sizes allow to separate different particle sizes, in particular consolidated conglomerates of powdery particles, from the build material. Thus, the particle size distribution of "fresh build material" may differ from the particle size distribution of build material that has already been used in a manufacturing process and/or that has been post-processed.

Further, the number of manufacturing process cycles, i.e. the number of times the build material has been used in a manufacturing process, may further alter the particle size distribution. Hence, build material that has been used in two manufacturing processes may have a different particle size distribution as build material that has only been used in one manufacturing process and so on. Of course, the particle size distribution is only one example of a parameter that may be changed by using the build material in a manufacturing process. Self-evidently, other parameters affecting the process quality, in particular the quality of the build material, can also be taken into calculation.

According to a first embodiment of the method, the number of sieving processes performed on at least one part of the build material received in the at least one build material container may be determined. Particularly, the first embodiment allows to determine whether at least one sieving process has been performed on the at least one part of build material received in the build material container. Consequently, the number of sieving processes may be determined as well. A sieving process can, for example, be regarded as post-processing step, as described before. Hence, build material that has not been consolidated in a manufacturing process can be delivered into a post-processing apparatus, for example a sieving unit adapted to sieve the build material, i.e. separate partially consolidated conglomerates of build material particles from non-consolidated build material particles. Such sieving processes have also other effects on the build material, for example the particle size distribution of the build material may be changed, e.g. dependent on the mesh size used to sieve the build material.

Generally, build material that has not been used in a manufacturing process, in particular has not been post-processed via a sieving unit, may comprise a broader particle size distribution than sieved build material, as more build material particles of different particles sizes are present in the volume of build material. Typically, in sieving units meshes with predefined grid sizes or mesh sizes are used, to separate particles, in particular conglomerates of partially consolidated build material particles, from the volume of build material. Thus, build material particles with sizes larger than the grid size will be separated from the volume of build material.

The described embodiment further allows verifying whether a sieving process has been performed on the build material that has already been used in the manufacturing process. Thereby, it can be avoided that build material that has been used in a manufacturing process is not properly post-processed, e.g. not sieved. Therefore, avoiding the use of build material containing partially consolidated build material particles is possible.

The term "determination" of the number of manufacturing processes build material has been used in and/or the number of sieving processes performed on the build material in the scope of this specification does not necessarily involve an analysis of the build material. Instead, the respective number of processes can also be "counted" in that for the corresponding build material the number of processes is stored or noted, wherein preferably the number of processes is updated, if another process is performed on the build material or the build material is used in another manufacturing process, respectively.

The method may further be improved in that dependent on the number of build processes (manufacturing processes) and/or the number of sieving process performed, at least one defined amount of build material with a defined number of build processes and/or sieving processes, in particular fresh build material, is added to the build material received in the build material container. The term "fresh build material" preferably refers to build material that has not been used in a manufacturing process. Fresh build material preferably comprises defined properties such as a defined particle size distribution.

Thus, a defined amount of build material may be added to the build material received in the build material container, for example to compensate the effects on the build material received in the build material container caused by the number of manufacturing processes the build material has been used in and/or the number of sieving processes performed on the build material. Dependent on the number of build processes or manufacturing processes and/or a number of sieving processes performed, the amount of the build material that is added to the build material received in the build material container can be varied, e.g. more "fresh build material" is added the higher the number of build processes and/or number of sieving processes performed.

By adding build material with a defined number of build processes and/or sieving processes to the build material received in the build material container a mixture of build materials with different numbers of build processes and/or sieving processes is possible. Thus, it may be useful to have the determination unit or a separate determination unit adapted to determine a blending degree, i.e. whether or to what degree the single build materials are blended.

It is also possible that a ratio of build material with different numbers of build processes and/or sieving processes the build material received in the build material container is comprised of is determined. Therefore, the corresponding determination unit is adapted to determine the ratio of build materials the volume of build material received in the build material container is composed of. In other words, the single amounts of the build materials with different numbers of build processes and/or sieving processes that are received in the build material container can be determined. For example, it is made feasible that a ratio of fresh build material and a ratio of build material with one build process and/or one sieving process and so on can be determined.

According to another embodiment of the method, the build material received in the build material container can be reused in different processing steps dependent on the number of build processes and/or a number of sieving processes. Thus, for different processing steps or for different objects to be manufactured in the manufacturing process different requirements can be defined, in particular relating to the build material quality or the object quality.

Such a "quality parameter" can be defined for different customers and/or different parts to be manufactured and/or different quality levels. The different quality levels can, for example, be defined regarding the intended use of the object, in particular it can be differentiated between high requirements, such as in medical or aerospace or similar applications requiring well met properties, e.g. mechanical properties of the object. Further, it is possible to define medium requirements and/or low requirements, such as models, toys or art in which various properties of the object, for example mechanical properties, are of minor importance.

Preferably, at least one parameter relating to the number of build processes and/or the number of sieving processes of the build material received in the at least one build material container may be determined, in particular the color and/or the grain size (particle size) and/or the grain size distribution (particle size distribution) and/or the mesh size of the at least one mesh used in a sieving process may be determined. By determining the above-mentioned parameter(s), conclusions can be made relating to the number of build processes and/or the number of sieving processes of the received build material and/or to the quality of the build material.

As, in particular the grain size and/or the grain size distribution varies with the number of build processes and/or the number of sieving processes performed, upon the determination of the grain size and/or the grain size distribution in the volume of build material received in the build material container, a statement about how often the build material has already been used and the current quality of the build material can be made. The described parameters can therefore, also be used to determine whether it is necessary to add build material with a defined number of build processes and/or a defined number of sieving processes, in particular fresh build material, to the build material received in the build material container.

According to another embodiment of the method, an information storage is suggested. In particular, the number of build processes and/or the number of sieving processes and/or the at least one parameter, as described above, can be stored via the information storage. The information storage may be connected with the build material container, wherein the information stored in or connected with the information storage can be read from the information storage directly or indirectly. For example, the information can be read directly from the information storage, e.g. with the information storage being built as a data storage, preferably a hard drive. The information stored in or linked with the information storage can also be read indirectly, in particular via a barcode and/or a QR-code and/or via RFID and/or NFC. The information storage may be attached to the build material container.

Of course, information can also be stored directly in a barcode and/or a QR-code or a RFID-tag or a NFC-tag. Thus, it is possible to store information, in particular the number of build processes and/or the number of sieving processes and/or the at least one parameter in the information storage. Besides, it is also possible that the respective information storage is used to link or identify the respective build material container the information storage is attached to with a data storage separate to the build material container in which the number of build processes and/or the number of sieving processes is stored. For example, an information storage attached to a build material container, for example as a QR-code, links the build material container with the corresponding entry in a data storage in which the number of processes the build material received in the corresponding build material container has already been used in and/or the number of sieving process is performed on the build material received in the corresponding build material container are stored. Of course, an arbitrary combination of the described ways to store and/or link and/or read information from the information storage or a data storage linked with the information storage is possible.

Another preferred embodiment of the method suggests that the number of build processes and/or the number of sieving processes is updated after a corresponding process is completed. After build material is used in a build process and/or after a sieving processes performed on the build material, the determined number of build processes and/or the number of sieving processes is updated, for example amended in the information storage attached with the corresponding build material container (or data storage).

Of course, it is also possible to provide specific build material containers that receive a build material with a defined number of build processes and/or a defined number of sieving processes performed. For example, a build material container may be provided in which solely build material that has already been used in one build process and/or which has already been sieved once is received. Analogously, another build material container may be provided in which build material that has already been used twice in a build process and/or which has already been sieved twice can be received. Further, thresholds may be defined up to which build material is received in an assigned build material container, e.g. a build material container is provided that receives build material that has been used in a defined number of build processes and/or build material that has been sieved a defined number of times, e.g. 3 times, wherein another build material container may be provided that receives build material that has been used in 4 to 6 build processes and/or which has been sieved 4 to 6 times.

Besides, the invention relates to a determination unit for an apparatus for additively manufacturing of three-dimensional objects by means of successive layerwise selective irradiation and consolidation of layers of a build material which can be consolidated by means of an energy source, which apparatus comprises at least one build material container adapted to receive build material, wherein the determination unit is adapted to determine the number of build processes at least one part of the build material received in the at least one build material container has been used in and/or the number of sieving process is performed on at least one part of the build material received in the at least one build material container. The determination unit, as described before, is preferably adapted to perform the inventive method.

Further, the invention relates to an apparatus for additively manufacturing of three-dimensional objects by means of successive layerwise selective irradiation and consolidation of layers of a build material which can be consolidated by means of an energy source, which apparatus comprises at least one build material container adapted to receive build material, wherein the apparatus comprises at least one inventive determination unit.

The respective build material container may, in particular, be built as or be comprised in a build module, e.g. a build chamber of a build module, and/or an overflow module, e.g. an overflow chamber of an overflow module, or the build material container may be connected with the build module or the overflow module. Further, the build material container may also be connectable with a corresponding post-processing apparatus, such as a handling station and/or a sieving station.

Of course, all features, details and advantages described with respect to the inventive method are fully transferable to the inventive determination unit and the inventive apparatus.

Exemplary embodiments of the invention are described with reference to the Fig. The Fig. are schematic diagrams, wherein
- Fig. 1: shows an inventive apparatus Exemplary embodiments;
- Fig. 2: shows an inventive handling station;
- Fig. 3: shows an inventive sieving station;
- Fig. 4: shows an inventive blending unit;
- Fig. 5: shows an inventive dose station;
- Fig. 6: shows an inventive determination unit; and
- Fig. 7: shows a flow diagram of the inventive method.

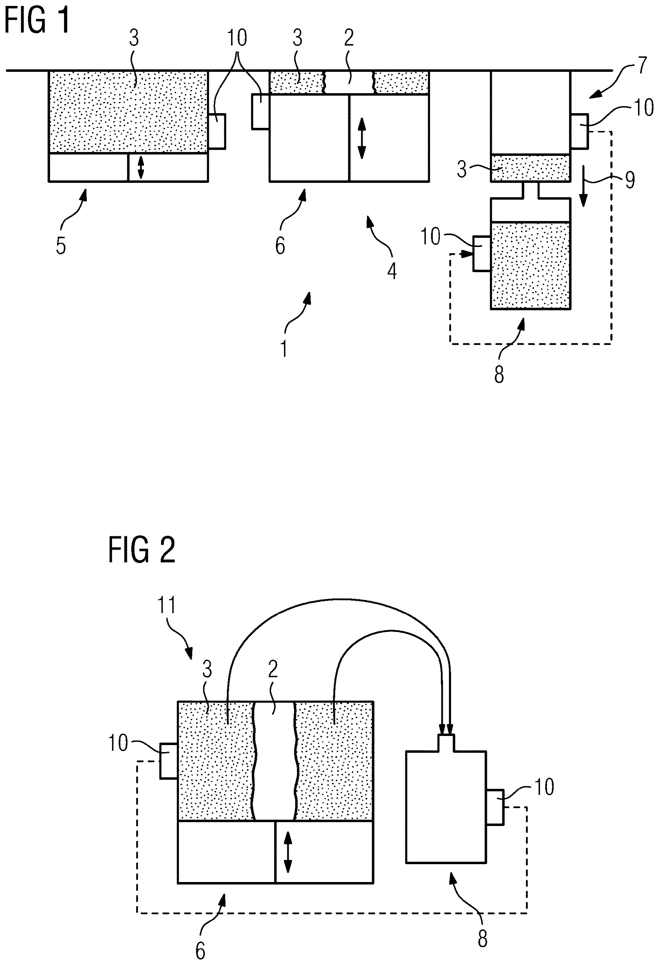

Fig. 1 shows an apparatus 1 for additively manufacturing of three-dimensional objects 2 by means of successive layerwise selective irradiation and consolidation of layers of a build material 3 which can be consolidated by means of an energy source, e.g. a laser beam. The apparatus comprises multiple build material containers 4 in which build material 3 is received or can be received. The apparatus 1 for example comprises a dose module 5, a build module 6 and an overflow module 7 which can all be regarded as build material containers 4 in the scope of this application.

Further, the apparatus 1 comprises a build material container 8 that is separably connectable with the modules 5 - 7, whereby the build material container 8 is connected to the overflow module 7 in the situation depicted in Fig. 1. Fig. 1 further shows that the build material containers 4, in particular the dose module 5, the build module 6, the overflow module 7 and the build material container 8 are equipped with information storages 10. Each information storage 10 is used to store the number of build processes the build material 3 received in the respective build material container 4 and the number of sieving processes performed on the build material 3 received in the respective build material container 4.

For example, the information storage 10 is built as readable information storage 10 attached to the outside of the respective build material container 4. In other words, the information storage 10 can be read by a corresponding device, e.g. the information storage 10 can be built as QR-code attached to an outer surface of the respective build material container 4 and read with a corresponding QR-code scanner (not shown). Thereby, the QR-code links the respective build material container 4 or the build material 3 received in the build material container 4 with the corresponding information stored in a data storage (not shown). Thus, if the information storage 10 attached to the build material container 4 is read, a link is established to the corresponding entry in the data storage. Of course, it is also possible to have the information directly stored in the information storage 10, for example by building the information storage 10 as data storage, e.g. as hard drive, directly.

As indicated with an arrow 9, the build material 3 received in the overflow module 7 can be filled from the overflow module 7 into the detachable build material container 8. The information relating to the build material 3 filled from the overflow module 7 into the build material container 8 is transferred from the information storage 10 of the overflow module 7 to the information storage 10 of the build material container 8. For example, if the build material 3 used in the dose module 5 is "fresh build material" that has not been used in a manufacturing process and has not been sieved, the corresponding information is transferred from the information storage 10 of the overflow module 7 (which may have received the information from the information storage 10 of the dose module 5) to the information storage 10 of the build material container 8. Thereby, the information is updated, as the build material 3 that is filled from the overflow module 7 into the build material container 8 has been used in the manufacturing process depicted in Fig. 1. Thus, the corresponding information is updated and stored (or linked) to the information storage 10 of the build material container 8. For the sake of simplicity, the reference sign 8 is used for detachable build material containers, wherein, of course, different build material containers or the same build material container can be used.

Fig. 2 shows a handling station 11 in which the non-consolidated build material 3 surrounding the object 2 is removed. The build module 6 is depicted after the build process has been finished and the object 2 has been manufactured in the corresponding build chamber of the build module 6. The non-consolidated build material 3 surrounding the object 2 is removed from the build chamber, e.g. sucked from the build chamber and filled into a build material container 8. Further, the corresponding information is received by the information storage 10 of the build material container 8 from the information storage 10 of the build module 6 (as depicted by a dashed arrow). Thus, the information, that the non-consolidated build material 3 has already been used in the manufacturing process is depicted in Fig. 1 (and maybe of the manufacturing processes and sieving processes before) is transferred to the information storage 10 of the build material container 8 (or the data storage linked with the information storage 10).

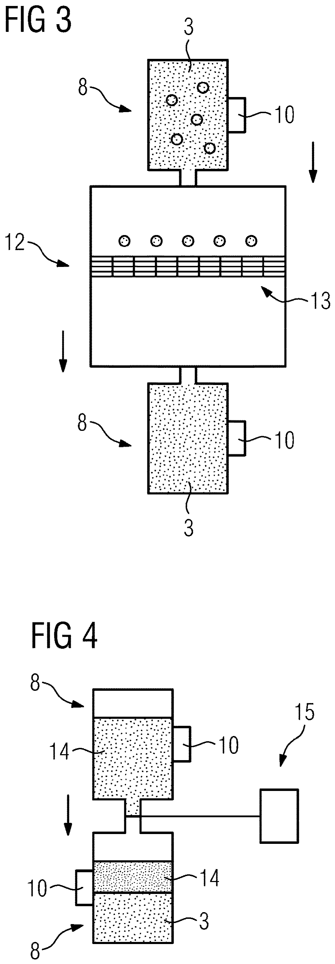

Fig. 3 shows a build material container 8 containing build material 3, for example the build material container 8 depicted in Fig. 1 or the build material container 8 depicted in Fig. 2, wherein both build material containers 8 contain build material 3 that has already been used in one or more manufacturing processes. The build material container 8 is attached to a sieving unit 12 comprising at least one mesh unit 13 with a defined mesh size. The mesh unit 13 can also be referred to as grid unit and the mesh size can also be referred to as grid size.

By conveying the build material 3 received in the build material container 8 through the mesh unit 13, build material 3 with the particle size larger than the mesh size is separated from the build material 3. In particular, at least partially consolidated build material 3, e.g. conglomerates of build material particles are separated from the build material 3. Thus, a build material container 8 or the same build material container 8 can be connected to the corresponding portion of the sieving unit 12 and therefore, receive the build material 3 that has been sieved by the sieving unit 12. Thus, the information storage 10 of the build material container 8 that receives the build material 3 sieved via the sieving unit 12 is updated in that the sieving process is added to the number of sieving processes performed on the build material 3 contained in the build material container 8.

As depicted in Fig. 4, build material 14 with a defined number of manufacturing processes (build processes) and/or a defined number of sieving processes performed on the build material 14, e.g. fresh build material, can be added to the build material 3 received in a build material container 8. Therefore, a blending unit 15 is provided that adds a specific amount or volume of build material 14 to the build material 3 received in the build material container 8. The number of build processes and/or sieving processes performed on the build material 14 are stored in the information storage 10 attached to the corresponding build material container 8 of the blending unit 15 or the respective numbers are updated. Further, the blending unit 15 is adapted to blend the build material 3, 14 received in the build material container 8 in that a homogeneous blend of build materials 3, 14 is achieved.

Accordingly, the information storage 10 attached to the build material container 8 that received the specific amount of build material 14 is updated in that the ratio of build material 3 to build material 14 after adding the build material 14 is stored in the information storage 10.

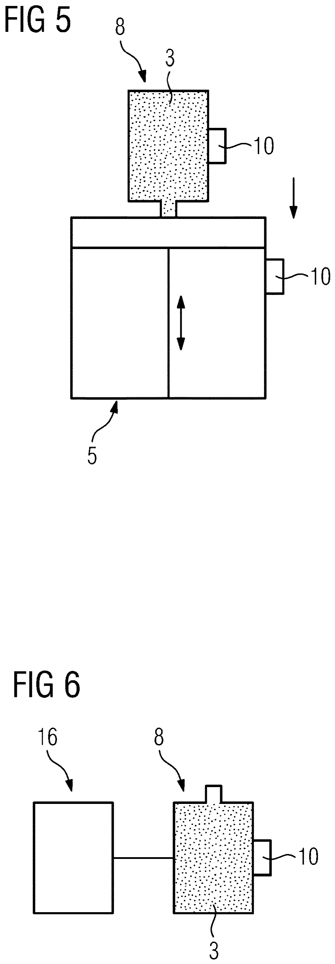

Fig. 5 shows a dose module 5 or the dose module 5 as depicted in Fig. 1 in an empty state. As depicted, build material 3 received in the build material container 8 can be added to the dose module 5, in particular in the corresponding dose chamber of the dose module 5. For example, the build material container 8 depicted in Fig. 5 is the build material container 8 that received the sieved build material 3 as depicted in Fig. 3, wherein build material 14 (e.g. "fresh build material") was added via the blending unit 15, as depicted in Fig. 4.

Thus, the information storage 10 attached to the build material container 8 contains the corresponding information regarding the process history of the build material 3, 14 received in the build material container 8. Therefore, it can be evaluated, whether the resulting blend of build material 3, 14 is suitable for the manufacturing process the dose module 5 provides the build material 3 for. Consequently, the information is transferred to the information storage 10 attached to the dose module 5.

Fig. 6 shows a determination unit 16 that is used to determine different parameters relating to the number of manufacturing processes the build material 3 received in the build material container 8 has been used in and the number of sieving processes performed on the build material 3 received in the build material container 8. Respective parameters the determination unit 16 determines are, for example, the color of the build material 3 and the grain size of the build material 3 as well as the grain size distribution of the build material 3 received in the build material container 8. The determination unit 16 also "counts" the number of manufacturing processes the corresponding build material 3 received in the build material container 8 is used in and the number of sieving processes performed on the build material 3. The determination unit 16 further updates the information stored in the information storages 10. The determination unit 16 can be considered as part of the apparatus 1 as depicted in Fig. 1. Of course, the apparatus 1, as well as the determination unit 16 are adapted to perform the inventive method.

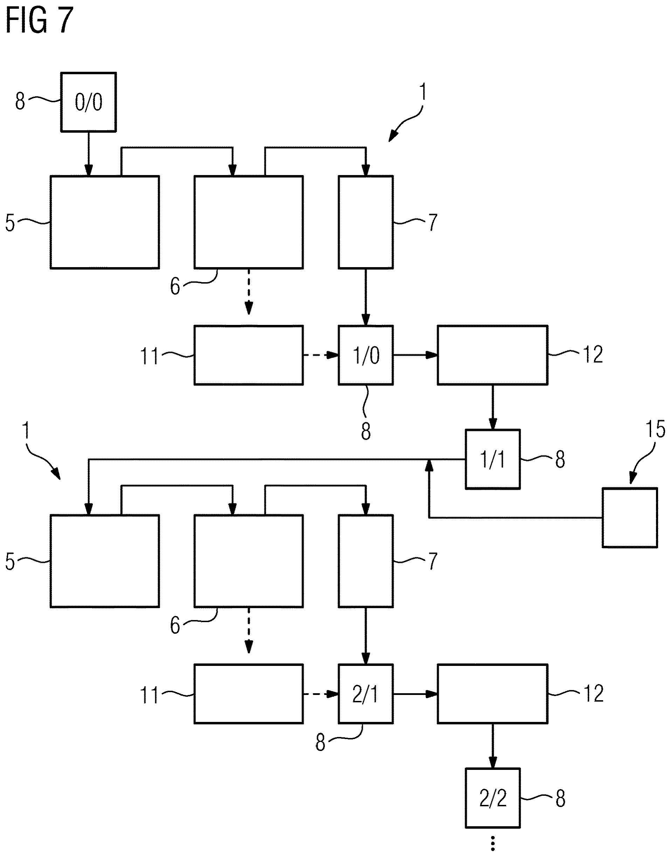

Fig. 7 shows a flow diagram of a method for operating an apparatus 1 for additively manufacturing three-dimensional objects to, for example as depicted in Fig. 1. In a first process step build material 3 is filled from a build material container 8 into a dose chamber of a dose module 5. The corresponding build material container 8 is referenced with "0/0", indicating that the build material 3 received in the build material container 8 is "fresh build material" that has been used in 0 manufacturing processes and wherein 0 sieving processes have been performed on the build material 3. In other words, the reference indicates the information stored in the information storage 10. The corresponding number of manufacturing processes and sieving processes performed on the build material 3 are transferred via the determination unit 16 from the information storage 10 attached to the build material container 8 to the information storage 10 assigned to the dose module 5.

The build material 3 received in the dose module 5 is conveyed into a build chamber of a build module 6, wherein surplus build material 3 is conveyed into an overflow chamber of an overflow module 7. Again, the build material 3 can be refilled into the build material container 8 that can be connected to the overflow module 7. Thus, the build material container 8 is referenced with "1/0", indicating that the build material 3 has been used in one manufacturing process and that no sieving process has been performed on the build material 3. By doing so it can be avoided that the build material 3 is reused in a manufacturing process without proper post-processing.

The build material 3 that has not been consolidated throughout the manufacturing process and is received in the build chamber of the build module 6 can also be added to the build material 3 contained in the build material container 8, wherein the non-consolidated build material 3 can be removed from the build chamber of the build material 6 in a handling station 11.

Subsequently, the build material container 8 receiving the build material 3 can be connected with a sieving unit 12 in which the build material 3 can be sieved, as described before with respect to Fig. 3. Accordingly, the build material container 8 is referenced with "1/1", indicating that the build material 3 received in the build material container 8 has been used in one manufacturing process and that one sieving process has been performed on the build material 3.

In the next process step build material 14 with a defined number of manufacturing processes and sieving processes can optionally be blended with the build material 3 received in the build material container 8 via a blending unit 15, as described before with respect to Fig. 4.

The build material 3 received in the build material container 8 can subsequently be reused in that the build material 3 can be filled from the build material container 8 into the dose module 5, as described before. An evaluation can be made whether the build material 3 indicated with "1/1" fulfills the requirements defined for the process the dose module 5 provides build material 3 for.

After another manufacturing process, the build material container 8 is referenced with "2/1", indicating that the build material 3 has been used in two manufacturing processes and that only one sieving process has been performed the build material 3 (in the case that no fresh build material has been blended via the blending unit 15).

Further, the build material 3 received in the build material container 8 can again be sieved in the sieving unit 12, wherein afterwards the build material container 8 is referenced with "2/2" indicating that the build material 3 received in the build material container 8 has been used in two manufacturing processes and that two sieving processes have been performed on the build material 3. The corresponding method can be continued accordingly.

Self-evidently, the described method can be performed on the determination unit 16 and the apparatus 1 comprising a corresponding determination unit 16.

## Claims

1. A method of additively manufacturing three-dimensional objects, the method comprising:
transferring from a first information storage element to a second information storage element, data pertaining to a build material, the build material having been transferred from a first build material container comprising the first information storage element to a second build material container comprising the second information storage element, wherein the data pertaining to the build material comprises a number of times the build material in the second build material container has been used in a current build process and/or one or more previous build processes, and a number of times the build material in the second build material container has been subjected to a current sieving process and/or one or more previous sieving processes;
determining a subsequent build process for using the build material in the second build material container, the subsequent build process comprising a subsequent portion of the current build process or a different build process from the current build process, and the subsequent build process determined based at least in part on the data pertaining to the build material satisfying a quality parameter specified for the subsequent build process; and
performing the subsequent build process using the build material in the second build material container.

2. The method of claim 1, wherein the current sieving process and/or the one or more previous sieving processes comprises separating build material with a particle size larger than a predetermined particle size from the build material prior to being received in the second build material container.

3. The method of claim 1, wherein the quality parameter specified for the subsequent build process depends at least in part on the number of times at least a first fraction of the build material received in the second build material container has been used in the current build process and/or the one or more previous build processes, and/or the number of times at least the first fraction of the build material received in the second build material container has been subjected to the current sieving process and/or the one or more previous sieving processes.

4. The method of claim 3, comprising:
adding a quantity of fresh build material to the build material received in the second build material container, the quantity of fresh build material depending at least in part on the number of times at least the first fraction of the build material received in the second build material container has been used in the current build process and/or the one or more previous build processes.

5. The method of claim 3, comprising:
determining a ratio of the first fraction of the build material received in the second build material container to a second fraction of build material received in the second build material container;
wherein the first fraction of the build material has been used in the current build process and/or the one or more previous build processes a first number of times, and the second fraction of build material has been used in the current build process and/or the one or more previous build processes a second number of times; and/or
wherein the first fraction of the build material has been subjected to the current sieving process and/or the one or more previous sieving processes a first number of times, and the second fraction of build material has been subjected to the current sieving process and/or the one or more previous sieving processes a second number of times.

6. The method of claim 3, comprising:
determining a parameter relating to the number of times at least the first fraction of the build material received in the second build material container has been used in the current build process and/or the one or more previous build processes; and/or
determining a parameter relating to the number of times at least the first fraction of the build material received in the second build material container has been subjected to the current sieving process and/or the one or more previous sieving processes;
wherein the parameter comprises: color, grain size, grain size distribution, and/or mesh size of a mesh used in the current sieving process and/or the one or more previous sieving processes to which the at least the first fraction of the build material has been subjected.

7. The method of claim 1, comprising:
assigning the build material received in the second build material container to a customer type and/or an object type based at least in part on the quality parameter for the build material received in the second build material container.

8. The method of claim 1, comprises:
subjecting the build material received in the second build material container to the current build process, and updating the number of times the build material has been used in the current build process; and/or
subjecting the build material received in the second build material container to the current sieving process, and updating the number of times the build material has been subjected to the current sieving process.

9. The method of claim 1, comprising:
performing the current build process using the build material, prior to receiving the build material in the second build material container; and/or
performing the current sieving process upon the build material with a sieving unit, prior to receiving the build material in the second build material container.

10. The method of claim 1, wherein the first information storage element comprises a first data storage device applied or attached to the first build material container; and/or wherein the second information storage element comprises a second data storage device applied or attached to the second build material container.

11. The method of claim 1, wherein the first information storage element comprises a first a barcode, a first QR-code, a first RFID tag, or a first NFC tag applied or attached to the first build material container; and/or wherein the second information storage element comprises a second a barcode, a second QR-code, a second RFID tag, or a second NFC tag applied or attached to the second build material container.

12. The method of claim 1, wherein the first build material container comprises: a dose module, a build module, an overflow module.

13. The method of claim 1, wherein the data pertaining to the build material comprises: a color of the build material, a grain size of the build material, and/or a grain size distribution of the build material.

14. The method of claim 1, comprising:
updating the data pertaining to the build material before or after transferring the data pertaining to the build material from the first information storage element to the second information storage element.

## Patentansprüche

1. Verfahren zur additiven Herstellung dreidimensionaler Objekte, wobei das Verfahren umfasst:
Transferieren von Daten, die sich auf ein Aufbaumaterial beziehen, von einem ersten Informationsspeicherelement an ein zweites Informationsspeicherelement, wobei das Aufbaumaterial von einem ersten Aufbaumaterialbehälter, der das erste Informationsspeicherelement aufweist, zu einem zweiten Aufbaumaterialbehälter, der das zweite Informationsspeicherelement aufweist, übertragen wurde, wobei die sich auf das Aufbaumaterial beziehenden Daten eine Anzahl von Malen beinhalten, die das Aufbaumaterial in dem zweiten Aufbaumaterialbehälter in einem aktuellen Bauprozess und/oder einem oder mehreren früheren Bauprozessen verwendet wurde, sowie eine Anzahl von Malen beinhalten, die das Aufbaumaterial in dem zweiten Aufbaumaterialbehälter einem aktuellen Siebprozess und/oder einem oder mehreren vorherigen Siebprozessen unterzogen wurde;
Bestimmen eines nachfolgenden Bauprozesses zur Verwendung des Aufbaumaterials in dem zweiten Aufbaumaterialbehälter, wobei der nachfolgende Bauprozess einen anschließenden Teil des aktuellen Bauprozesses oder einen anderen Bauprozess als den aktuellen Bauprozess umfasst und der nachfolgende Bauprozess zumindest teilweise basierend auf den Daten bestimmt wird, die sich auf das Aufbaumaterial beziehen, das einen für den nachfolgenden Bauprozess vorgegebenen Qualitätsparameter erfüllt; und
Durchführen des nachfolgenden Bauprozesses unter Verwendung des Aufbaumaterials in dem zweiten Aufbaumaterialbehälter.

2. Verfahren nach Anspruch 1, wobei der aktuelle Siebprozess und/oder der eine oder die mehreren vorherigen Siebprozesse das Trennen von Aufbaumaterial mit einer Partikelgröße, die größer ist als eine vorgegebene Partikelgröße, von dem Aufbaumaterial vor der Aufnahme in den zweiten Aufbaumaterialbehälter umfasst.

3. Verfahren nach Anspruch 1, wobei der für den anschließenden Bauprozess vorgegebene Qualitätsparameter zumindest teilweise von der Anzahl von Malen abhängig ist, für die zumindest ein erster Anteil des in dem zweiten Aufbaumaterialbehälter aufgenommenen Aufbaumaterials im aktuellen Bauprozess verwendet wurde und/oder dem einen oder den mehreren vorherigen Bauprozessen und/oder der Häufigkeit, mit der zumindest der erste Anteil des im zweiten Aufbaumaterialbehälter aufgenommenen Aufbaumaterials dem aktuellen Siebprozess und/oder dem einen oder den mehreren vorherigen Siebprozessen unterzogen wurde.

4. Verfahren nach Anspruch 3, umfassend:
Hinzugeben einer Menge an frischem Aufbaumaterial zu dem in dem zweiten Aufbaumaterialbehälter aufgenommenen Aufbaumaterial, wobei die Menge an frischem Aufbaumaterial zumindest teilweise von der Anzahl von Malen abhängig ist, für die zumindest der erste Anteil des in dem zweiten Aufbaumaterialbehälter aufgenommenen Aufbaumaterials im aktuellen Bauprozess und/oder in einem oder mehreren vorherigen Bauprozessen verwendet wurde.

5. Verfahren nach Anspruch 3, umfassend:
Bestimmen eines Verhältnisses des ersten Anteils des in dem zweiten Aufbaumaterialbehälter aufgenommenen Aufbaumaterials zu einem zweiten Anteil des in dem zweiten Aufbaumaterialbehälter aufgenommenen Aufbaumaterials;
wobei der erste Anteil des Aufbaumaterials in dem aktuellen Bauprozess und/oder dem einen oder den mehreren vorherigen Bauprozessen eine erste Anzahl von Malen verwendet wurde und der zweite Anteil des Aufbaumaterials im aktuellen Bauprozess und/oder dem einen oder den mehreren vorherigen Bauprozessen ein zweites Mal verwendet wurde; und/oder
wobei der erste Anteil des Aufbaumaterials dem aktuellen Siebprozess und/oder dem einen oder den mehreren vorherigen Siebprozessen eine erste Anzahl von Malen unterzogen wurde und der zweite Anteil des Aufbaumaterials dem aktuellen Siebprozess und/oder dem einen oder mehr vorhergehenden Siebprozessen eine zweite Anzahl von Malen unterzogen wurde.

6. Verfahren nach Anspruch 3, umfassend:
Bestimmen eines Parameters, der sich auf die Anzahl von Malen bezieht, für die zumindest der erste Anteil des im zweiten Aufbaumaterialbehälter aufgenommenen Aufbaumaterials im aktuellen Bauprozess und/oder dem einen oder den mehreren vorherigen Bauprozessen verwendet wurde; und/oder
Bestimmen eines Parameters, der sich auf die Anzahl von Malen bezieht, um die zumindest der erste Anteil des im zweiten Aufbaumaterialbehälter aufgenommenen Aufbaumaterials dem aktuellen Siebprozess und/oder dem einen oder den mehreren vorherigen Siebprozessen unterzogen wurde;
wobei der Parameter umfasst: Farbe, Korngröße, Korngrößenverteilung und/oder Mesh-Größe eines Gewebes, die im aktuellen Siebprozess und/oder dem einen oder den mehreren vorherigen Siebprozessen, denen zumindest der erste Anteil des Aufbaumaterials unterzogen wurde.

7. Verfahren nach Anspruch 1, umfassend:
Zuweisen des im zweiten Aufbaumaterialbehälter aufgenommenen Aufbaumaterials zu einem Kundentyp und/oder einem Objekttyp, basierend zumindest teilweise auf Grundlage des Qualitätsparameters für das im zweiten Aufbaumaterialbehälter aufgenommene Aufbaumaterial.

8. Verfahren nach Anspruch 1, umfassend:
Unterziehen des im zweiten Aufbaumaterialbehälter aufgenommenen Aufbaumaterials dem aktuellen Bauprozess und Aktualisieren der Häufigkeit, mit der das Aufbaumaterial im aktuellen Bauprozess verwendet wurde; und/oder Unterziehen des im zweiten Aufbaumaterialbehälter aufgenommenen Aufbaumaterials dem aktuellen Siebprozess und Aktualisieren der Häufigkeit, mit der das Aufbaumaterial dem aktuellen Siebprozess unterzogen wurde.

9. Verfahren nach Anspruch 1, umfassend:
Durchführen des aktuellen Bauprozesses unter Verwendung des Aufbaumaterials vor der Aufnahme des Aufbaumaterials in den zweiten Aufbaumaterialbehälter; und/oder
Durchführen des aktuellen Siebvorgangs des Aufbaumaterials mit einer Siebeinheit vor der Aufnahme des Aufbaumaterials in den zweiten Aufbaumaterialbehälter.

10. Verfahren nach Anspruch 1, wobei das erste Informationsspeicherelement eine erste Datenspeichervorrichtung aufweist, die an dem ersten Aufbaumaterialbehälter angebracht oder befestigt ist; und/oder wobei das zweite Informationsspeicherelement eine zweite Datenspeichervorrichtung aufweist, die an dem zweiten Aufbaumaterialbehälter angebracht oder befestigt ist.

11. Verfahren nach Anspruch 1, wobei das erste Informationsspeicherelement einen ersten Strichcode, einen ersten QR-Code, ein erstes RFID-Etikett oder ein erstes NFC-Etikett aufweist, die am ersten Aufbaumaterialbehälter angebracht oder befestigt sind; und/oder wobei das zweite Informationsspeicherelement einen zweiten Strichcode, einen zweiten QR-Code, ein zweites RFID-Etikett oder ein zweites NFC-Etikett aufweist, die am zweiten Aufbaumaterialbehälter angebracht oder befestigt sind.

12. Verfahren nach Anspruch 1, wobei der erste Aufbaumaterialbehälter aufweist: ein Dosiermodul, ein Aufbaumodul und ein Überfüllmodul.

13. Verfahren nach Anspruch 1, wobei die Daten, die sich auf das Aufbaumaterial beziehen, umfassen: eine Farbe des Aufbaumaterials, eine Korngröße des Aufbaumaterials und/oder eine Korngrößenverteilung des Aufbaumaterials.

14. Verfahren nach Anspruch 1, umfassend:
Aktualisieren der Daten, die sich auf das Aufbaumaterial beziehen, vor oder nach dem Transfer der Daten, die sich auf das Aufbaumaterial beziehen, vom ersten Informationsspeicherelement auf das zweite Informationsspeicherelement.

## Revendications

1. Procédé de fabrication additive d'objets tridimensionnels, le procédé comprenant :
le transfert d'un premier élément de stockage d'informations à un deuxième élément de stockage d'informations, de données relatives à un matériau de construction, le matériau de construction ayant été transféré d'un premier contenant de matériau de construction comprenant le premier élément de stockage d'informations à un deuxième contenant de matériau de construction comprenant le deuxième élément de stockage d'informations, les données relatives au matériau de construction comprenant un nombre de fois où le matériau de construction dans le deuxième contenant de matériau de construction a été utilisé dans un processus de construction actuel et/ou un ou plusieurs processus de construction précédents, et un nombre de fois où le matériau de construction dans le deuxième contenant de matériau de construction a été soumis à un processus de tamisage actuel et/ou à un ou plusieurs processus de tamisage précédents ;
la détermination d'un processus de construction ultérieur pour l'utilisation du matériau de construction dans le deuxième contenant de matériau de construction, le processus de construction ultérieur comprenant une partie ultérieure du processus de construction actuel ou un processus de construction différent du processus de construction actuel, et le processus de construction ultérieur étant déterminé au moins en partie sur la base des données relatives au matériau de construction satisfaisant un paramètre de qualité spécifié pour le processus de construction ultérieur ; et
l'exécution du processus de construction ultérieur en utilisant le matériau de construction dans le deuxième contenant de matériau de construction.

2. Procédé selon la revendication 1, dans lequel le processus de tamisage actuel et/ou les un ou plusieurs processus de tamisage précédents comprennent la séparation du matériau de construction ayant une taille de particules supérieure à une taille de particules prédéterminée du matériau de construction avant qu'il ne soit reçu dans le deuxième contenant de matériau de construction.

3. Procédé selon la revendication 1, dans lequel le paramètre de qualité spécifié pour le processus de construction ultérieur dépend au moins en partie du nombre de fois qu'au moins une première fraction du matériau de construction reçu dans le deuxième contenant de matériau de construction a été utilisée dans le processus de construction actuel et/ou les un ou plusieurs processus de construction précédents, et/ou du nombre de fois qu'au moins la première fraction du matériau de construction reçu dans le deuxième contenant de matériau de construction a été soumise au processus de tamisage actuel et/ou aux un ou plusieurs processus de tamisage précédents.

4. Procédé selon la revendication 3, comprenant :
l'ajout d'une quantité de matériau de construction frais au matériau de construction reçu dans le deuxième contenant de matériau de construction, la quantité de matériau de construction frais dépendant au moins en partie du nombre de fois qu'au moins la première fraction du matériau de construction reçu dans le deuxième contenant de matériau de construction a été utilisée dans le processus de construction actuel et/ou les un ou plusieurs processus de construction précédents.

5. Procédé selon la revendication 3, comprenant :
la détermination d'un rapport entre la première fraction du matériau de construction reçu dans le deuxième contenant de matériau de construction et une deuxième fraction de matériau de construction reçu dans le deuxième contenant de matériau de construction ;
dans lequel la première fraction du matériau de construction a été utilisée dans le processus de construction actuel et/ou les un ou plusieurs processus de construction précédents un premier nombre de fois, et la deuxième fraction de matériau de construction a été utilisée dans le processus de construction actuel et/ou les un ou plusieurs processus de construction précédents un deuxième nombre de fois ; et/ou dans lequel la première fraction du matériau de construction a été soumise au processus de tamisage actuel et/ou aux un ou plusieurs processus de tamisage précédents un premier nombre de fois, et la deuxième fraction de matériau de construction a été soumise au processus de tamisage actuel et/ou aux un ou plusieurs processus de tamisage précédents un deuxième nombre de fois.

6. Procédé selon la revendication 3, comprenant :
la détermination d'un paramètre relatif au nombre de fois qu'au moins la première fraction du matériau de construction reçu dans le deuxième contenant de matériau de construction a été utilisée dans le processus de construction actuel et/ou les un ou plusieurs processus de construction précédents ; et/ou
la détermination d'un paramètre relatif au nombre de fois qu'au moins la première fraction du matériau de construction reçu dans le deuxième contenant de matériau de construction a été soumise au processus de tamisage actuel et/ou aux un ou plusieurs processus de tamisage précédents ;
dans lequel le paramètre comprend : la couleur, la taille des grains, la distribution de la taille des grains et/ou la taille de maille d'une maille utilisée dans le processus de tamisage actuel et/ou les un ou plusieurs processus de tamisage précédents auxquels au moins la première fraction du matériau de construction a été soumise.

7. Procédé selon la revendication 1, comprenant :
l'affectation du matériau de construction reçu dans le deuxième contenant de matériau de construction à un type de client et/ou à un type d'objet sur la base, au moins en partie, du paramètre de qualité pour le matériau de construction reçu dans le deuxième contenant de matériau de construction.

8. Procédé selon la revendication 1, comprenant :
la soumission du matériau de construction reçu dans le deuxième contenant de matériau de construction au processus de construction actuel, et la mise à jour du nombre de fois où le matériau de construction a été utilisé dans le processus de construction actuel ; et/ou
la soumission du matériau de construction reçu dans le deuxième contenant de matériau de construction au processus de tamisage actuel, et la mise à jour du nombre de fois où le matériau de construction a été soumis au processus de tamisage actuel.

9. Procédé selon la revendication 1, comprenant :
l'exécution du processus de construction actuel en utilisant le matériau de construction, avant de recevoir le matériau de construction dans le deuxième contenant de matériau de construction ; et/ou
l'exécution du processus de tamisage actuel sur le matériau de construction avec une unité de tamisage, avant de recevoir le matériau de construction dans le deuxième contenant de matériau de construction.

10. Procédé selon la revendication 1, dans lequel le premier élément de stockage d'informations comprend un premier dispositif de stockage de données appliqué ou fixé au premier contenant de matériau de construction ; et/ou dans lequel le deuxième élément de stockage d'informations comprend un deuxième dispositif de stockage de données appliqué ou fixé au deuxième contenant de matériau de construction.

11. Procédé selon la revendication 1, dans lequel le premier élément de stockage d'informations comprend un premier code-barres, un premier code QR, une première étiquette RFID ou une première étiquette NFC appliquée ou attachée au premier contenant de matériau de construction ; et/ou dans lequel le deuxième élément de stockage d'informations comprend un deuxième code-barres, un deuxième code QR, une deuxième étiquette RFID ou une deuxième étiquette NFC appliquée ou attachée au deuxième contenant de matériau de construction.

12. Procédé selon la revendication 1, dans lequel le premier contenant de matériau de construction comprend : un module de dose, un module de construction, un module de débordement.

13. Procédé selon la revendication 1, dans lequel les données relatives au matériau de construction comprennent : une couleur du matériau de construction, une taille des grains du matériau de construction, et/ou une distribution de la taille des grains du matériau de construction.

14. Procédé selon la revendication 1, comprenant :
la mise à jour des données relatives au matériau de construction avant ou après le transfert des données relatives au matériau de construction du premier élément de stockage d'informations au deuxième élément de stockage d'informations.
